# EUROPEAN PATENT APPLICATION

(11) **EP 4 734 172 A1**
(43) Date of publication of application: **29.04.2026**
(21) Application number: 24825592.9
(22) Date of filing: 10.05.2024
(51) Int. Cl.: H01M 4/36, H01M 4/62

(54) **COATED ACTIVE MATERIAL, POSITIVE ELECTRODE MATERIAL, AND BATTERY**

(30) Priority: 21.06.2023 JP 2023101894
(71) Applicant: Panasonic Holdings Corporation, Kadoma-shi, Osaka 571-8501 (JP); Toyota Jidosha Kabushiki Kaisha, Toyota-shi, Aichi 471-8571 (JP)
(72) Inventor: MIZUNO, Keita, Kadoma-shi, Osaka 571-0057 (JP); SUGIMOTO, Yuta, Kadoma-shi, Osaka 571-0057 (JP); HASHIMOTO, Kazuya, Kadoma-shi, Osaka 571-0057 (JP); SASAKI, Izuru, Kadoma-shi, Osaka 571-0057 (JP)
(74) Representative: Eisenführ Speiser
(86) International application number: PCT/JP2024/017532
(87) International publication number: WO 2024/262183

(57) **Abstract**

A coated active material of the present disclosure includes a positive electrode active material, and a coating material including a first solid electrolyte and coating at least a portion of a surface of the positive electrode active material. The first solid electrolyte includes Li, M, and X. The M is at least one element selected from the group consisting of a metal element other than Li and a metalloid element, and the X is a halogen element. A value obtained by dividing the integrated value of the amount of moisture released from the coated active material at the time of the heating of the coated active material from 120°C to 180°C by the total mass of the coated active material is defined as MC₁₈₀. In this case, the moisture content MC₁₈₀ satisfies 0 ppm < MC₁₈₀ ≤ 600 ppm.

## Description

### TECHNICAL FIELD

The present disclosure relates to a coated active material, a positive electrode material, and a battery.

### BACKGROUND ART

Patent Literature 1 discloses a positive electrode material including a positive electrode active material and a first solid electrolyte material coating at least a portion of a surface of the positive electrode active material. The first solid electrolyte material includes Li, Ti, M1, and F. The M1 is at least one element selected from the group consisting of Ca, Mg, Al, Y, and Zr.

Non Patent Literature 1 describes that, when a layered positive electrode material is heated, as a form of moisture generated from the positive electrode material, there may be various forms of moisture, such as adsorbed water on the surface of the positive electrode material, and a reaction product of the adsorbed water and CO₂ with the positive electrode material.

### CITATION LIST

### Patent Literature

Patent Literature 1: WO 2021/187391 A1

### Non Patent Literature

Non Patent Literature 1: Journal of The Electrochemical Society, 164 (14) A3727-A3741 (2017)

### SUMMARY OF INVENTION

### Technical Problem

In the related art, it is required to suppress an increase in the resistance of a battery.

### Solution to Problem

A coated active material of the present disclosure is a coated active material including:
a positive electrode active material; and
a coating material including a first solid electrolyte and coating at least a portion of a surface of the positive electrode active material, wherein
the first solid electrolyte includes Li, M, and X,
the M is at least one element selected from the group consisting of a metal element other than Li and a metalloid element,
the X is a halogen element, and
when a value obtained by dividing an integrated value of an amount of moisture released from the coated active material at a time of heating of the coated active material from 120°C to 180°C by a total mass of the coated active material is defined as MC₁₈₀,
the MC₁₈₀ satisfies 0 ppm < MC₁₈₀ ≤ 600 ppm.

### Advantageous Effects of Invention

According to the present disclosure, it is possible to suppress an increase in the resistance of a battery.

### BRIEF DESCRIPTION OF DRAWINGS

FIG. 1 is a cross-sectional view schematically showing the configuration of a coated active material of Embodiment 1.
FIG. 2 is a cross-sectional view schematically showing the configuration of a positive electrode material of Embodiment 2.
FIG. 3 is a cross-sectional view schematically showing the configuration of a battery of Embodiment 3.

### DESCRIPTION OF EMBODIMENTS

### (Findings on which the present disclosure is based)

For example, when a positive electrode active material and a solid electrolyte are in contact in a positive electrode, the solid electrolyte may undergo oxidative decomposition during charging of the battery. The oxidative decomposition tends to occur easily when a solid electrolyte having poor oxidation stability such as a sulfide solid electrolyte is used. To address this issue, it has been proposed to coat the surface of the positive electrode active material with a coating material including a solid electrolyte having excellent oxidation stability such as a halide solid electrolyte.

Meanwhile, the present inventors have discovered that even with a solid electrolyte of the same composition in the coating material, a difference arises in the durability of a battery, specifically, in the degree of increase in the resistance of the battery after a durability test. As a result of intensive studies, the present inventors have found that there is a correlation between the amount of moisture released when a positive electrode active material having a surface coated with a coating material including a solid electrolyte is heated, and the degree of increase in the resistance of the battery after a durability test, and have come to conceive of the technique of the present disclosure.

Embodiments of the present disclosure will be described below with reference to the drawings. The present disclosure is not limited to the following embodiments.

### (Embodiment 1)

### [Coated active material]

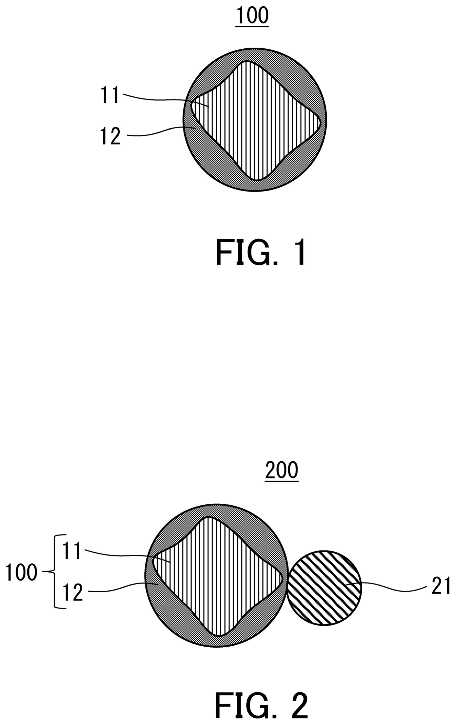

FIG. 1 is a cross-sectional view schematically showing the configuration of a coated active material of Embodiment 1. The coated active material 100 of Embodiment 1 includes a positive electrode active material 11 and a coating material 12. The coating material 12 includes a first solid electrolyte and coats at least a portion of a surface of the positive electrode active material 11.

A value obtained by dividing the integrated value of the amount of moisture released from the coated active material 100 at the time of the heating of the coated active material 100 from 120°C to 180°C by the total mass of the coated active material 100 is defined as MC₁₈₀. In this case, the moisture content MC₁₈₀ satisfies 0 ppm < MC₁₈₀ ≤ 600 ppm. In the present disclosure, the "ppm" means a mass fraction, that is, wtppm (mass/mass).

The coated active material 100 may contain moisture that is physically adsorbed on a surface of the coated active material 100 and moisture that is chemically bonded to the coated active material 100. The moisture chemically bonded to the coated active material 100 is, for example, water of crystallization or an intermediate-like compound formed by a reaction of Li, CO₂, and H₂O near the surface of the positive electrode active material 11 and/or the coating material 12. Details on what form of moisture is included in the moisture released from the coated active material 100 at the time of the heating of the coated active material 100 from 120°C to 180°C are not necessarily clear. However, in view of the fact that the moisture is desorbed from the coated active material 100 in the relatively high temperature region exceeding 120°C, it is inferred that the moisture is mainly moisture chemically bonded to the coated active material 100. For example, when water of crystallization is present in the crystal of a compound for forming the positive electrode active material 11 and/or the coating material 12, it is conceived that the water of crystallization is bonded to the coated active material 100 with a stronger bonding energy than physically adsorbed water, and is bonded to the coated active material 100 with a weaker bonding energy than a covalent bond or an ionic bond.

In the related art, it has been thought that the moisture content in the coated active material is desirably as low as possible. This is because it has been thought that a portion of the coating layer deteriorates by a reaction between a lithium-containing fluoride such as Li₂.₇Ti₀.₃Al₀.₇F₆ contained in the coating layer and the moisture contained in the coated active material, and the deteriorated portion functions as a resistance layer at the interface between the positive electrode active material and the coating layer. However, studies made by the present inventors have newly found that it is rather desirable for the coated active material to contain a very small amount of moisture. When the moisture content MC₁₈₀ satisfies 0 ppm < MC₁₈₀ ≤ 600 ppm, a sufficient amount of moisture is chemically bonded to the coated active material 100 for a reaction layer having an appropriate thickness to be formed at the interface between the coated active material 100 and a second solid electrolyte to be described later, at the time of the initial charging of a battery including a positive electrode material produced by mixing the coated active material 100 and the second solid electrolyte. When the moisture content MC₁₈₀ is more than 60 ppm, the thickness of the reaction layer to be formed increases, which is not suitable because it leads to a significant increase in the resistance of the battery due to the increased function of the resistance layer described above. The reaction layer is formed by a reaction between the moisture and the second solid electrolyte. A reaction layer having an appropriate thickness can suppress the degradation of a positive electrode including the coated active material 100 and the second solid electrolyte, such as a thermodynamic reaction caused by the coated active material 100 and the second solid electrolyte brought into contact with each other, or oxidative decomposition of the second solid electrolyte due to exposure to a high potential. Therefore, the coated active material 100 can suppress an increase in the resistance of the battery.

When the coated active material 100 is further heated from 180°C, the amount of moisture released from the coated active material 100 increases sharply. It is inferred that this is because, for example, an intermediate-like compound formed by the reaction of Li, CO₂, and H₂O present near the surface of the positive electrode active material 11 in the coated active material 100 starts to decompose and release moisture.

The moisture content MC₁₈₀ may be measured, for example, by the Karl Fischer method. For example, the moisture content MC₁₈₀ may be determined with a Karl Fischer apparatus (Karl Fischer moisture meter) in the following manner.

**In** a dry nitrogen gas atmosphere, an introduction portion for the coated active material 100 serving as a measurement sample is preheated at 300°C so that the apparatus is stabilized. The "coated active material 100 serving as a measurement sample" means a group of particles of the coated active material 100.

After the apparatus becomes stabilized, the temperature of the introduction portion is set at 180°C. When the temperature of the introduction portion reaches 180°C, a background moisture release amount (µg/sec) is measured.

Subsequently, the temperature of the introduction portion is set at 25°C. When the temperature of the introduction portion reaches 25°C, the measurement sample is introduced into the introduction portion. The measurement sample is heated from 25°C to 120°C at a rate of temperature rise of 10°C per minute to vaporize the moisture contained in the measurement sample. Subsequently, the measurement sample is heated from 120°C to 180°C at a rate of temperature rise of 10°C per minute to vaporize the moisture contained in the measurement sample. The integrated value of the amount of moisture released from the measurement sample is determined by quantifying and integrating the moisture vaporized by coulometric titration until the amount of the moisture vaporized reaches the background moisture release amount or less. The moisture content MC₁₈₀ is determined by dividing the integrated value of the amount of moisture by the total mass of the measurement sample.

The degree of increase in the resistance of the battery is expressed by the index "(R₂/R₁) × 100 (%)". (R₂/R₁) is a value obtained by dividing a resistance R₂ after a durability test by a resistance R₁ before the durability test. The durability test is, for example, a test in which a battery is stored in a high-temperature environment for a certain period. The resistance R₁ and the resistance R₂ may be determined by the following method. A battery produced by using a positive electrode material including the coated active material 100 is placed in a thermostatic chamber at 25°C, and is charged and discharged. Next, the battery is charged and discharged to a predetermined voltage. After that, constant-current discharge within a range of 1 second or longer and 10 seconds or shorter is performed at a predetermined current value. The resistance R₁ before the durability test is determined by dividing the amount of voltage drop at this time, that is, the difference between an open circuit voltage before discharge and an open circuit voltage at the end of discharge, by a discharge current value. Then, the durability test is performed under appropriate conditions. After the durability test, the same charge and discharge process is performed as described above. Next, the battery is charged and discharged to a predetermined voltage. After that, constant-current discharge within a range of 1 second or longer and 10 seconds or shorter is performed at a predetermined current value. The resistance R₂ after the durability test is determined by dividing the amount of voltage drop at this time by a discharge current value.

The moisture content MC₁₈₀ may satisfy MC₁₈₀ ≤ 400 ppm. According to such a configuration, when a positive electrode material is produced by mixing the coated active material 100 and the second solid electrolyte, a reaction layer having an appropriate thickness is easily formed on the surface of the coated active material 100. As a result, an increase in the resistance of the battery in the initial stage can be suppressed.

The moisture content MC₁₈₀ may satisfy MC₁₈₀ ≤ 390 ppm, may satisfy MC₁₈₀ ≤ 380 ppm, may satisfy MC₁₈₀ ≤ 370 ppm, may satisfy MC₁₈₀ ≤ 360 ppm, may satisfy MC₁₈₀ ≤ 350 ppm, or may satisfy MC₁₈₀ ≤ 343 ppm. According to such a configuration, as a result, the increase in the resistance of the battery in the initial stage can be further suppressed.

The moisture content MC₁₈₀ may satisfy 1 ppm ≤ MC₁₈₀, may satisfy 2 ppm ≤ MC₁₈₀, may satisfy 3 ppm ≤ MC₁₈₀, or may satisfy 4 ppm ≤ MC₁₈₀. According to such a configuration, when a positive electrode material is produced by mixing the coated active material 100 and the second solid electrolyte, a reaction between the moisture and the second solid electrolyte is likely to occur homogeneously at various locations on the surface of the coated active material 100, and a reaction layer having a sufficient thickness is easily formed on the surface of the coated active material 100. As a result, the increase in the resistance of the battery can be suppressed.

The moisture content MC₁₈₀ may satisfy 5 ppm ≤ MC₁₈₀, may satisfy 10 ppm ≤ MC₁₈₀, may satisfy 20 ppm ≤ MC₁₈₀, may satisfy 30 ppm ≤ MC₁₈₀, or may satisfy 35 ppm ≤ MC₁₈₀. According to such a configuration, the increase in the resistance of the battery can be further suppressed.

The moisture content MC₁₈₀ may satisfy 50 ppm ≤ MC₁₈₀, or may satisfy 58 ppm ≤ MC₁₈₀. According to such a configuration, the increase in the resistance of the battery can be even further suppressed.

The moisture content MC₁₈₀ may satisfy 70 ppm ≤ MC₁₈₀, may satisfy 80 ppm ≤ MC₁₈₀, may satisfy 90 ppm ≤ MC₁₈₀, or may satisfy 100 ppm ≤ MC₁₈₀. According to such a configuration, the increase in the resistance of the battery can be even further suppressed.

### (Coating material)

The coating material 12 is in direct contact with the positive electrode active material 11. The coating material 12 includes a first solid electrolyte. The first solid electrolyte has ion conductivity. The ion conductivity is typically lithium ion conductivity.

The first solid electrolyte includes Li, M, and X. M is at least one element selected from the group consisting of a metal element other than Li and a metalloid element. X is a halogen element. A first solid electrolyte having such composition has excellent oxidation resistance. Therefore, it is possible to suppress the oxidation of a second solid electrolyte in contact with the positive electrode active material 11. Thus, an increase in the resistance of the battery can be suppressed.

In the present disclosure, the "metalloid element" includes B, Si, Ge, As, Sb, and Te. The "metal element" includes all elements in Group 1 to Group 12 of the periodic table except for hydrogen, and all elements in Group 13 to Group 16 except for B, Si, Ge, As, Sb, Te, C, N, P, O, S, and Se. That is, the metal element is a group of elements that can become cations when forming an inorganic compound with a halogen element.

As described above, the first solid electrolyte includes a halogen element. A solid electrolyte including a halogen element is also referred to as a halide solid electrolyte. The halide solid electrolyte has excellent oxidation resistance.

X may be F. A halide solid electrolyte including F has excellent oxidation resistance resulting from the high electronegativity of F. Therefore, by coating at least a portion of the surface of the positive electrode active material 11 with the coating material 12 including the first solid electrolyte, the oxidation of the second solid electrolyte in contact with the positive electrode active material 11 can be further suppressed. Therefore, the increase in the resistance of the battery can be further suppressed.

M may include M1 and M2. In this case, M1 may be at least one selected from the group consisting of Ti and Zr, and M2 may be at least one selected from the group consisting of Al, Y, Mg, and Ca. In a first solid electrolyte having such composition, a cation skeleton structure suitable for ion conduction can be formed in a crystal lattice. Therefore, the first solid electrolyte exhibits a high ionic conductivity. A high ionic conductivity is, for example, 1.0 × 10⁻⁸ S/cm or more. That is, the first solid electrolyte may have an ionic conductivity of, for example, 1.0 × 10⁻⁸ S/cm or more.

M2 may be Al. The first solid electrolyte having such composition exhibits an even higher ionic conductivity.

M1 may be Ti. The first solid electrolyte having such composition exhibits an even higher ionic conductivity.

The first solid electrolyte may consist essentially of Li, Ti, Al, and F. In the present disclosure, the "first solid electrolyte consists essentially of Li, Ti, Al, and F" means that the molar ratio (i.e., molar fraction) of the total amount of substance of Li, Ti, Al, and F to the total amount of substance of all elements for forming the first solid electrolyte is 90% or more. As an example, the molar ratio (i.e., molar fraction) may be 95% or more. The first solid electrolyte may consist only of Li, Ti, Al, and F.

The first solid electrolyte may be represented by the following composition formula (1).

Li_{6-(4-x-4y+my)b}(Ti_{1-x-y}AlₓM3_{y})_{b}F_{6-2z}O_{z} ... (1)

Here, M3 is at least one selected from the group consisting of Zr, Ni, Fe, and Cr, m is a valence of M3, and 0.1 < x < 0.9, 0 ≤ y < 0.1, 0 ≤ z < 0.1, and 0.8 < b ≤ 1.2 are satisfied. The first solid electrolyte having such composition has a high ionic conductivity and can be produced by a method with high industrial productivity.

In the composition formula (1), 0.1 < x < 0.9, y = 0, z = 0, and 0.8 < b ≤ 1.2 may be satisfied. The first solid electrolyte having such composition has a higher ionic conductivity.

In the composition formula (1), 0.1 ≤ x ≤ 0.7 may be satisfied.

The upper and lower limits of the range for x in the composition formula (1) may be defined by any combination selected from the numerical values of 0.1, 0.3, 0.4, 0.5, 0.6, 0.65, 0.67, 0.7, 0.8, and 0.9.

The upper and lower limits of the range for b in the composition formula (1) may be defined by any combination selected from the numerical values of 0.8, 0.9, 0.94, 1.0, 1.06, 1.1, and 1.2.

The first solid electrolyte may be crystalline or amorphous.

The shape of the first solid electrolyte is not particularly limited. The shape of the first solid electrolyte is, for example, acicular, spherical, or ellipsoidal. The shape of the first solid electrolyte may be particulate.

When the shape of the first solid electrolyte is, for example, particulate (e.g., spherical), the first solid electrolyte may have a median diameter of 0.01 µm or more and 100 µm or less.

In the present disclosure, the "median diameter" means a particle diameter when a cumulative volume is equal to 50% in a volumetric particle size distribution. The volumetric particle size distribution is measured with, for example, a laser diffraction analyzer or an image analyzer.

The coating material 12 may include the first solid electrolyte as a main component, or may include only the first solid electrolyte. In the present disclosure, the "main component" means a component included in the largest amount in terms of mass ratio. The "including only the first solid electrolyte" means that no material other than the first solid electrolyte is intentionally added, except for unavoidable impurities. For example, raw materials for the first solid electrolyte, and by-products generated when the first solid electrolyte is produced are included in the unavoidable impurities. The mass ratio of the unavoidable impurities to the total mass of the coating material 12 may be 5% or less, may be 3% or less, may be 1% or less, or may be 0.5% or less.

The coating material 12 may be free of sulfur.

The coating material 12 may uniformly coat the positive electrode active material 11.

The coating material 12 may coat only a portion of the surface of the positive electrode active material 11. **In** this case, particles of the positive electrode active material 11 are brought into direct contact with each other via a portion not coated with the coating material 12, and hence the electron conductivity between the particles of the positive electrode active material 11 is enhanced. As a result, a battery can operate at a high output.

The shape of the coating material 12 itself is not particularly limited. For example, a thin film formed by an accumulation of fine particles of the coating material 12 having a plate shape, an acicular shape, a spherical shape, an ellipsoidal shape, or the like may coat at least a portion of the surface of the positive electrode active material 11.

The thickness of the thin film of the coating material 12 is, for example, 1 nm or more and 500 nm or less. When the thickness of the thin film of the coating material 12 is appropriately adjusted, contact between the positive electrode active material 11 and the second solid electrolyte can be sufficiently suppressed. The thickness of the thin film of the coating material 12 may be determined, for example, by observing a cross-section of a particle of the coated active material 100 with a scanning electron microscope (SEM). The average value of the thicknesses of the thin film of the coating material 12 measured at a plurality of arbitrary positions (e.g., five points) may be regarded as the thickness of the thin film of the coating material 12.

### (Positive electrode active material)

The positive electrode active material 11 includes, for example, a material having properties of occluding and releasing metal ions (e.g., lithium ions). A lithium-containing transition metal oxide, a transition metal fluoride, a polyanion material, a fluorinated polyanion material, a transition metal sulfide, a transition metal oxysulfide, a transition metal oxynitride, or the like may be used as the positive electrode active material 11. When the lithium-containing transition metal oxide is used as the positive electrode active material 11, the manufacturing cost of a battery can be reduced, and the average discharge voltage of the battery can be enhanced. Examples of the lithium-containing transition metal oxide include Li(Ni,Co,Al)O₂, Li(Ni,Co,Mn)O₂, and LiCoO₂.

In the present disclosure, when an element in a formula is expressed as, for example, "(Ni,Co,Al)", this expression indicates at least one element selected from the group of elements in parentheses. That is, "(Ni,Co,Al)" is synonymous with "at least one selected from the group consisting of Ni, Co, and Al". The same applies to other elements.

The positive electrode active material 11 has, for example, a particulate shape. The shape of the particles of the positive electrode active material 11 is not particularly limited. The shape of the particles of the positive electrode active material 11 may be spherical, ellipsoidal, flaky, or fibrous.

The positive electrode active material 11 may have a median diameter of 0.1 µm or more and 100 µm or less. When the median diameter of the positive electrode active material 11 is 0.1 µm or more, the coated active material 100 and the second solid electrolyte can form a favorable dispersion state. As a result, the charge and discharge characteristics of a battery are enhanced. When the median diameter of the positive electrode active material 11 is 100 µm or less, the diffusion rate of lithium inside the positive electrode active material 11 is sufficiently ensured. Therefore, a battery can operate at a high output.

The positive electrode active material 11 may include lithium nickel cobalt aluminum oxide. The lithium nickel cobalt aluminum oxide may be Li(Ni,Co,Al)O₂. According to such a configuration, the energy density of a battery can be increased.

Li(Ni,Co,Al)O₂ encompasses those including at least one additive element in addition to Li, Ni, Co, and Al. The additive element may be at least one or two or more elements selected from the group consisting of boron (B), sodium (Na), magnesium (Mg), silicon (Si), phosphorus (P), sulfur (S), potassium (K), calcium (Ca), titanium (Ti), vanadium (V), chromium (Cr), manganese (Mn), iron (Fe), copper (Cu), zinc (Zn), gallium (Ga), germanium (Ge), zirconium (Zr), niobium (Nb), molybdenum (Mo), indium (In), tin (Sn), tungsten (W), lanthanum (La), and cerium (Ce).

### <Method for producing first solid electrolyte>

The first solid electrolyte contained in the coating material 12 may be produced by, for example, the following method.

Two or more types of raw material powders are prepared so as to have target composition. For example, when Li₂.₇Ti₀.₃Al₀.₇F₆ is produced, LiF, TiF₄, and AlF₃ are prepared so that their molar ratio is LiF:TiF₄:AlF₃ = 2.7:0.3:0.7. The raw material powders may be mixed at a molar ratio that is adjusted in advance to offset composition changes that may occur in the synthesis process.

After the mixing of the raw material powders, the raw material powders are reacted together in a mixer such as a planetary ball mill by using a mechanochemical milling method to obtain a reaction product. The obtained reaction product may be further sintered in an inert gas atmosphere or in a vacuum.

Alternatively, a mixture of the raw material powders may be sintered in an inert gas atmosphere to react with each other to obtain a reaction product. Examples of the inert gas include helium, nitrogen, and argon. The sintering may be performed in a vacuum. In the sintering step, the mixture of the raw material powders may be placed in a container and sintered in a heating furnace. The container is, for example, a crucible, a hermetically sealed container, or a vacuum-sealed tube.

By those methods, the first solid electrolyte having the composition described above is obtained.

The composition of the first solid electrolyte may be determined by, for example, inductively coupled plasma atomic emission spectroscopy, ion chromatography, or the like.

### <Method for producing coated active material>

The coated active material 100 of Embodiment 1 may be produced, for example, by the following method.

A powder of the positive electrode active material 11 and a powder of the coating material 12 including the first solid electrolyte are prepared at a predetermined mass ratio. For example, a powder of Li(Ni,Co,Al)O₂ is prepared as the positive electrode active material 11, and a powder of Li₂.₇Al₀.₇Ti₀.₃F₆ serving as the first solid electrolyte is prepared as the coating material 12. By imparting a mechanical energy to a mixture of these two types of materials, at least a portion of the surface of the positive electrode active material 11 can be coated with the coating material 12 to obtain the coated active material 100. For example, the two types of materials may be placed in a container and a shearing force may be applied to the two types of materials with a rotating blade. For example, the two types of materials may be placed in a container so that the two types of materials are caused to collide with each other by a jet stream. The powder of the positive electrode active material 11 and the powder of the coating material 12 are mixed at an appropriate ratio.

Before a mechanical energy is imparted to the mixture of the powder of the positive electrode active material 11 and the powder of the coating material 12, the mixture may be subjected to a milling process. For the milling process, a mixer such as a ball mill may be used. To suppress side reactions of the materials, the milling process may be performed in a dry atmosphere or an inert atmosphere.

The coated active material 100 may be produced by a dry particle composing method. The process by the dry particle composing method includes imparting at least one mechanical energy selected from the group consisting of impact, compression, and shear to the mixture of the powder of the positive electrode active material 11 and the powder of the coating material 12.

The apparatus used for manufacturing the coated active material 100 is not particularly limited. The apparatus may be an apparatus capable of imparting a mechanical energy generated by compression, shear, friction, etc. to the mixture of the powder of the positive electrode active material 11 and the powder of the coating material 12. Examples of the apparatus capable of imparting a mechanical energy include a ball mill, a jet mill, a compression shear type processing apparatus (particle composing apparatus), such as "MECHANO FUSION" (manufactured by Hosokawa Micron Corporation) or "NOBILTA" (manufactured by Hosokawa Micron Corporation), "Hybridization System" (high-speed airflow impact apparatus) (manufactured by Nara Machinery Co., Ltd.), and "BALANCE GRAN" (manufactured by Freund Turbo Corporation).

"MECHANO FUSION" is a particle composing machine using a dry mechanical composing technology of imparting a high mechanical energy to a plurality of different material particles. MECHANO FUSION produces composite particles by imparting a mechanical energy generated by compression, shear, friction, etc. to powdery raw materials charged between a rotating vessel and a press head.

"NOBILTA" is a particle composing machine using a dry mechanical composing technology developed from the particle composing technology in order to perform composing using nanoparticles as a raw material. NOBILTA produces composite particles by imparting a mechanical energy generated by impact, compression, and shear to a plurality of raw material powders.

In "NOBILTA", inside a horizontal cylindrical mixing vessel, a rotor is disposed with a predetermined gap from the inner wall of the mixing vessel, and the rotor rotates at a high speed to repeat processing of forcibly passing raw material powders through the gap multiple times. This exerts the force of impact, compression, and shear on the mixture, and thus composite particles of the positive electrode active material 11 and the coating material 12 can be produced. Conditions, such as the rotation speed of the rotor, a processing time, and a charge amount, may be adjusted as appropriate.

In "Hybridization System", a force mainly of impact is applied while the raw material powders are dispersed in a high-speed airflow. This allows the production of composite particles of the positive electrode active material 11 and the coating material 12.

"BALANCE GRAN" includes a chopper that stirs powder in a spiral from the outer circumference toward the inner circumference to promote convection, and an agitator scraper that rotates in the opposite direction to the chopper. The action of the chopper and the agitator scraper allows the mixture to be uniformly dispersed to produce composite particles of the positive electrode active material 11 and the coating material 12.

However, the processing with the above apparatus is not essential. The coated active material 100 may be produced by mixing the powder of the positive electrode active material 11 and the powder of the coating material 12 with a mortar, a mixer, or the like. The coating material 12 may be deposited on the surface of the positive electrode active material 11 by various methods, such as a spray method, a spray dry coating method, an electrodeposition method, a dipping method, and a mechanical mixing method with a disperser.

For example, by performing the manufacturing process for the coated active material 100 in an environment with low environmental moisture, the moisture content MC₁₈₀ can be adjusted to the above range (0 ppm < MC₁₈₀ ≤ 600 ppm). For example, the manufacturing process for the coated active material 100 may be performed in a dry air environment having a dew point of -30°C or lower. The manufacturing process for the coated active material 100 may be performed in a dry air environment having a dew point of -50°C or lower.

For example, after the coating of at least a portion of the surface of the positive electrode active material 11 with the coating material 12, the moisture content MC₁₈₀ may be adjusted to the above range (0 ppm < MC₁₈₀ ≤ 600 ppm) by temporarily storing the coated product in an environment with low environmental moisture. For example, after the coating of at least a portion of the surface of the positive electrode active material 11 with the coating material 12, the coated product may be stored in a hermetically sealed container in a dry air environment having a dew point of -30°C or lower. The coated product may be stored in a hermetically sealed container in a dry air environment having a dew point of -50°C or lower.

### (Embodiment 2)

Embodiment 2 will be described below. The description overlapping those of Embodiment 1 will be omitted as appropriate.

### [Positive electrode material]

FIG. 2 is a cross-sectional view schematically showing the configuration of a positive electrode material 200 of Embodiment 2.

The positive electrode material 200 includes the coated active material 100 of Embodiment 1 and a second solid electrolyte 21. The positive electrode material 200 includes the coated active material 100, and is hence suitable for suppressing an increase in the resistance of a battery.

The positive electrode active material 11 of the coated active material 100 is separated from the second solid electrolyte 21 by the coating material 12. The positive electrode active material 11 is not required to be in direct contact with the second solid electrolyte 21. This is because the coating material 12 has ion conductivity.

The second solid electrolyte 21 may have composition different from the composition of the first solid electrolyte included in the coating material 12 of the coated active material 100, or may have the same composition.

The second solid electrolyte 21 may include at least one selected from the group consisting of a halide solid electrolyte, a sulfide solid electrolyte, an oxide solid electrolyte, a polymer solid electrolyte, and a complex hydride solid electrolyte. The second solid electrolyte 21 may include a sulfide solid electrolyte. The second solid electrolyte 21 can achieve a high ionic conductivity in the positive electrode material 200.

As the halide solid electrolyte, for example, Li₃REX₆, Li₃(Al,Ga,In)X₆, Li₂MgX₄, Li₂FeX₄, Li(Al,Ga,In)X₄, or LiI may be used. Here, X is at least one selected from the group consisting of Cl, Br, and I, and RE is at least one selected from the group consisting of rare earth elements.

As the sulfide solid electrolyte, for example, Li₂S-P₂S₅, Li₂S-SiS₂, Li₂S-B₂S₃, Li₂S-GeS₂, Li_{3.25}Ge_{0.25}P_{0.75}S₄, or Li₁₀GeP₂S₁₂ may be used. To these, LiX, Li₂O, MO_{q}, LiₚMO_{q}, or the like may be added. The element X in "LiX" is at least one type of element selected from the group consisting of F, Cl, Br, and I. The element M in "MO_{q}" and "LiₚMO_{q}" is at least one type of element selected from the group consisting of P, Si, Ge, B, Al, Ga, In, Fe, and Zn. The symbols p and q in "MO_{q}" and "LiₚMO_{q}" are each an independent natural number.

As the oxide solid electrolyte, for example, there may be used a NASICON solid electrolyte typified by LiTi₂(PO₄)₃ and element-substituted substances thereof, a (LaLi)TiO₃-based perovskite solid electrolyte, a LISICON solid electrolyte material typified by Li₁₄ZnGe₄O₁₆, Li₄SiO₄, and LiGeO₄ and element-substituted substances thereof, a garnet solid electrolyte typified by Li₇La₃Zr₂O₁₂ and element-substituted substances thereof, Li₃N and N-substituted substances thereof, Li₃PO₄ and N-substituted substances thereof, and glass or glass ceramics obtained by adding a material, such as Li₂SO₄ or Li₂CO₃, to a Li-B-O compound, such as LiBO₂ or Li₃BO₃, serving as a base material.

As the polymer solid electrolyte, for example, a compound of a polymer compound and a lithium salt may be used. The polymer compound may have an ethylene oxide structure. When the polymer compound has an ethylene oxide structure, the polymer compound can contain a large amount of a lithium salt. Consequently, the ionic conductivity can be further enhanced. As the lithium salt, for example, LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), or LiC(SO₂CF₃)₃ may be used. As the lithium salt, one lithium salt selected from these materials may be used alone, or a mixture of two or more lithium salts selected from these materials may be used.

As the complex hydride solid electrolyte, for example, LiBH₄-LiI or LiBH₄-P₂S₅ may be used.

The second solid electrolyte 21 may include two or more selected from the materials listed as solid electrolytes. The second solid electrolyte 21 may include, for example, a halide solid electrolyte and a sulfide solid electrolyte.

The second solid electrolyte 21 may include unavoidable impurities, such as starting materials used when the solid electrolyte is synthesized, by-products, and decomposition products.

The shape of the second solid electrolyte 21 is not particularly limited and may be, for example, acicular, spherical, or ellipsoidal. The shape of the second solid electrolyte 21 may be particulate.

When the shape of the second solid electrolyte 21 is, for example, particulate (e.g., spherical), the solid electrolyte may have a median diameter of 0.1 µm or more and 100 µm or less. When the median diameter falls within this range, the dispersion state of the coated active material 100 and the second solid electrolyte 21 in the positive electrode material 200 becomes favorable.

The median diameter of the second solid electrolyte 21 may be 10 µm or less. In this case, the dispersion state of the coated active material 100 and the second solid electrolyte 21 in the positive electrode material 200 becomes more favorable.

The median diameter of the second solid electrolyte 21 may be smaller than the median diameter of the coated active material 100. In this case, the dispersion state of the coated active material 100 and the second solid electrolyte 21 in the positive electrode material 200 becomes more favorable.

In the positive electrode material 200, the coated active material 100 and the second solid electrolyte 21 may be in contact with each other. In this case, the coating material 12 and the second solid electrolyte 21 are in contact with each other.

The positive electrode material 200 may include a plurality of particles of the second solid electrolyte 21 and a plurality of particles of the coated active material 100. That is, the positive electrode material 200 may be a mixture of a powder of the coated active material 100 and a powder of the second solid electrolyte 21.

In the positive electrode material 200, the content of the coated active material 100 and the content of the second solid electrolyte 21 may be identical to or different from each other.

The positive electrode material 200 may include a binder for the purpose of enhancing the adhesion between the particles. The binder is used to enhance the binding property of the materials for forming the positive electrode. Examples of the binder include polyvinylidene fluoride, polytetrafluoroethylene, polyethylene, polypropylene, an aramid resin, a polyamide, a polyimide, a polyamideimide, polyacrylonitrile, a polyacrylic acid, polyacrylic acid methyl ester, polyacrylic acid ethyl ester, polyacrylic acid hexyl ester, a polymethacrylic acid, polymethacrylic acid methyl ester, polymethacrylic acid ethyl ester, polymethacrylic acid hexyl ester, polyvinyl acetate, polyvinylpyrrolidone, a polyether, a polycarbonate, a polyethersulfone, a polyetherketone, a polyetheretherketone, polyphenylene sulfide, hexafluoropolypropylene, styrene-butadiene rubber, carboxymethyl cellulose, and ethyl cellulose. Moreover, there may be used a copolymer of two or more monomers selected from the group consisting of tetrafluoroethylene, hexafluoroethylene, hexafluoropropylene, a perfluoroalkyl vinyl ether, vinylidene fluoride, chlorotrifluoroethylene, ethylene, propylene, butadiene, styrene, pentafluoropropylene, fluoromethyl vinyl ether, an acrylic acid ester, an acrylic acid, and hexadiene. These materials may be used alone or in combination.

For the reason of an excellent binding property, the binder may be an elastomer. An elastomer is a polymer that has rubber elasticity. The elastomer used as the binder may be a thermoplastic elastomer or a thermosetting elastomer. The binder may include a thermoplastic elastomer. Examples of the thermoplastic elastomer include styrene-ethylene-butylene-styrene (SEBS), styrene-ethylene-propylene-styrene (SEPS), styrene-ethylene-ethylene-propylene-styrene (SEEPS), butylene rubber (BR), isoprene rubber (IR), chloroprene rubber (CR), acrylonitrile-butadiene rubber (NBR), styrene-butylene rubber (SBR), styrene-butadiene-styrene (SBS), styrene-isoprene-styrene (SIS), hydrogenated isoprene rubber (HIR), hydrogenated butyl rubber (HIIR), hydrogenated nitrile rubber (HNBR), hydrogenated styrene-butylene rubber (HSBR), polyvinylidene fluoride (PVdF), and polytetrafluoroethylene (PTFE). These materials may be used alone or in combination.

The positive electrode material 200 may include a conductive additive for the purpose of enhancing electronic conductivity. Examples of the conductive additive include graphite, such as natural graphite or artificial graphite, carbon black, such as acetylene black or Ketjenblack, a conductive fiber, such as a carbon fiber or a metal fiber, fluorinated carbon, a metal powder, such as an aluminum powder, a conductive whisker, such as a zinc oxide whisker or a potassium titanate whisker, a conductive metal oxide, such as titanium oxide, and a conductive polymer compound, such as a polyaniline compound, a polypyrrole compound, or a polythiophene compound. When a conductive carbon additive is used, cost reduction can be achieved.

The above conductive additive may be included in the coating material 12 of the coated active material 100.

### <Method for producing positive electrode material>

The positive electrode material 200 is obtained by mixing together the coated active material 100 and the second solid electrolyte 21. The method for mixing together the coated active material 100 and the second solid electrolyte 21 is not particularly limited. For example, an implement such as a mortar may be used to mix together the coated active material 100 and the second solid electrolyte 21, or a mixer such as a ball mill may be used to mix together the coated active material 100 and the second solid electrolyte 21.

### (Embodiment 3)

Embodiment 3 will be described below. The description overlapping those of Embodiments 1 and 2 will be omitted as appropriate.

A battery of Embodiment 3 includes a positive electrode, a separator portion, and a negative electrode. The separator portion is located between the positive electrode and the negative electrode. The positive electrode includes the positive electrode material 200 of Embodiment 2. According to such a configuration, an increase in the resistance of the battery is suppressed, and hence the durability of the battery is enhanced.

The separator portion may be an electrolyte layer including a solid electrolyte, or may be a separator impregnated with an electrolytic solution.

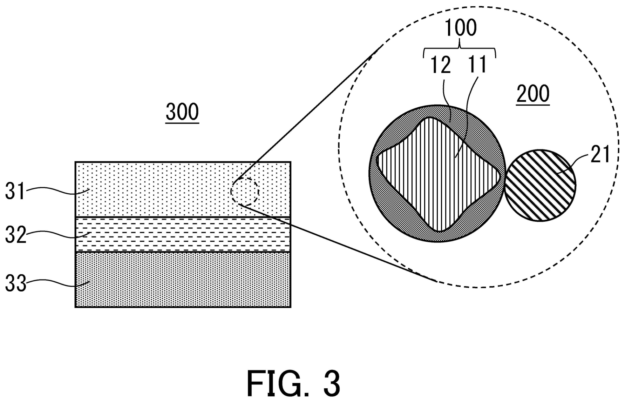

FIG. 3 is a cross-sectional view schematically showing the configuration of a battery 300 of Embodiment 3.

The battery 300 includes a positive electrode 31, an electrolyte layer 32, and a negative electrode 33. The electrolyte layer 32 is disposed between the positive electrode 31 and the negative electrode 33. In the battery 300, the separator portion is the electrolyte layer 32. The positive electrode 31 includes the positive electrode material 200 of Embodiment 2. According to such a configuration, an increase in the resistance of the battery 300 is suppressed, and hence the durability of the battery 300 is enhanced.

The thickness of each of the positive electrode 31 and the negative electrode 33 may be 10 µm or more and 500 µm or less. When the thickness of each of the positive electrode 31 and the negative electrode 33 is 10 µm or more, a sufficient energy density of the battery 300 can be ensured. When the thickness of each of the positive electrode 31 and the negative electrode 33 is 500 µm or less, the battery 300 can operate at a high output.

The electrolyte layer 32 is a layer including an electrolyte material. The electrolyte layer 32 may include at least one solid electrolyte selected from the group consisting of a sulfide solid electrolyte, an oxide solid electrolyte, a halide solid electrolyte, a polymer solid electrolyte, and a complex hydride solid electrolyte. The details of each solid electrolyte are as described in Embodiment 2.

The thickness of the electrolyte layer 32 may be 1 µm or more and 300 µm or less. When the thickness of the electrolyte layer 32 is 1 µm or more, the positive electrode 31 and the negative electrode 33 can be separated more securely. When the thickness of the electrolyte layer 32 is 300 µm or less, the battery 300 can operate at a high output.

The negative electrode 33 includes, as a negative electrode active material, a material having properties of occluding and releasing metal ions (e.g., lithium ions).

A metal material, a carbon material, an oxide, a nitride, a tin compound, a silicon compound, or the like may be used as the negative electrode active material. The metal material may be a simple substance of metal. Alternatively, the metal material may be an alloy. Examples of the metal material include lithium metal and a lithium alloy. Examples of the carbon material include natural graphite, coke, partially graphitized carbon, a carbon fiber, spherical carbon, artificial graphite, and amorphous carbon. From the viewpoint of a capacity density, silicon (Si), tin (Sn), a silicon compound, a tin compound, or the like may be suitably used.

The median diameter of the particles of the negative electrode active material may be 0.1 µm or more and 100 µm or less.

The negative electrode 33 may include other materials such as a solid electrolyte. As the solid electrolyte, the materials described in Embodiment 2 may be used.

The battery 300 may be configured as a battery having any of various shapes, such as a coin type, a cylindrical type, a prismatic type, a sheet type, a button type, a flat type, and a stacked type.

### (Other Embodiments)

### (Appendix)

The following techniques are disclosed by the description of the above embodiments.

### (Technique 1)

A coated active material including:
a positive electrode active material; and
a coating material including a first solid electrolyte and coating at least a portion of a surface of the positive electrode active material, wherein
the first solid electrolyte includes Li, M, and X,
the M is at least one element selected from the group consisting of a metal element other than Li and a metalloid element,
the X is a halogen element, and
when a value obtained by dividing an integrated value of an amount of moisture released from the coated active material at a time of heating of the coated active material from 120°C to 180°C by a total mass of the coated active material is defined as MC₁₈₀,
the MC₁₈₀ satisfies 0 ppm < MC₁₈₀ ≤ 600 ppm.

The coated active material of Technique 1 can suppress an increase in the resistance of a battery.

### (Technique 2)

The coated active material according to Technique 1, wherein the MC₁₈₀ satisfies MC₁₈₀ ≤ 400 ppm. According to such a configuration, the increase in the resistance of a battery in the initial stage can be suppressed.

### (Technique 3)

The coated active material according to Technique 1 or 2, wherein the MC₁₈₀ satisfies 1 ppm ≤ MC₁₈₀. According to such a configuration, the increase in the resistance of a battery can be suppressed.

### (Technique 4)

The coated active material according to any one of Techniques 1 to 3, wherein the MC₁₈₀ satisfies 30 ppm ≤ MC₁₈₀. According to such a configuration, the increase in the resistance of a battery can be further suppressed.

### (Technique 5)

The coated active material according to any one of Techniques 1 to 4, wherein the MC₁₈₀ satisfies 50 ppm ≤ MC₁₈₀. According to such a configuration, the increase in the resistance of a battery can be even further suppressed.

### (Technique 6)

The coated active material according to any one of Techniques 1 to 5, wherein the X is F. According to such a configuration, the oxidation of another solid electrolyte in contact with the positive electrode active material can be suppressed. Therefore, the increase in the resistance of a battery can be suppressed.

### (Technique 7)

The coated active material according to any one of Techniques 1 to 6, wherein the M includes M1 and M2, the M1 is at least one selected from the group consisting of Ti and Zr, and the M2 is at least one selected from the group consisting of Al, Y, Mg, and Ca. According to such a configuration, the first solid electrolyte exhibits a high ionic conductivity.

### (Technique 8)

The coated active material according to Technique 7, wherein the M2 is Al. According to such a configuration, the first solid electrolyte exhibits a higher ionic conductivity.

### (Technique 9)

The coated active material according to Technique 7 or 8, wherein the M1 is Ti. According to such a configuration, the first solid electrolyte exhibits a higher ionic conductivity.

### (Technique 10)

The coated active material according to any one of Techniques 1 to 9, wherein the first solid electrolyte is represented by the following composition formula (1):

Li_{6-(4-x-4y+my)b}(Ti_{1-x-y}AlₓM3_{y})_{b}F_{6-2z}O_{z} ... (1),

where
the M3 is at least one selected from the group consisting of Zr, Ni, Fe, and Cr, the m is a valence of the M3, and the x, the y, the z, and the b satisfy 0.1 < x < 0.9, 0 ≤ y < 0.1, 0 ≤ z < 0.1, and 0.8 < b ≤ 1.2. According to such a configuration, the first solid electrolyte has a high ionic conductivity and can be produced by a method with high industrial productivity.

### (Technique 11)

The coated active material according to Technique 10, wherein the x, the y, the z, and the b satisfy 0.1 < x < 0.9, y = 0, z = 0, and 0.8 < b ≤ 1.2. According to such a configuration, the first solid electrolyte has a higher ionic conductivity.

### (Technique 12)

A positive electrode material including:
the coated active material according to any one of Techniques 1 to 11; and
a second solid electrolyte having composition different from composition of the first solid electrolyte.

The positive electrode material of Technique 12 includes the coated active material, and is hence suitable for suppressing an increase in the resistance of a battery.

### (Technique 13)

The positive electrode material according to Technique 12, wherein the second solid electrolyte includes a sulfide solid electrolyte. According to such a configuration, a high ionic conductivity can be achieved in the positive electrode material.

### (Technique 14)

A battery including a positive electrode including the positive electrode material according to Technique 12.

According to the battery of Technique 14, an increase in the resistance of a battery is suppressed, and hence the durability of the battery is enhanced.

### (Technique 15)

A battery including:
a positive electrode including the positive electrode material according to Technique 12;
a negative electrode; and
an electrolyte layer disposed between the positive electrode and the negative electrode.

According to the battery of Technique 15, an increase in the resistance of a battery is suppressed, and hence the durability of the battery is enhanced.

### Examples

The present disclosure will be described below in detail with reference to examples and reference examples. The present invention is not limited to the following examples.

### <<Example 1>>

### [Positive electrode active material]

Li(NiCoAl)O₂ (hereinafter referred to as NCA) having a median diameter of 5 µm was used as a positive electrode active material.

### [Production of coating material (first solid electrolyte)]

In an argon glove box controlled to a dew point of -60°C or lower, LiF, TiF₄, and AlF₃ serving as raw material powders were weighed at a molar ratio of LiF:TiF₄:AlF₃ = 2.7:0.3:0.7. These materials were pulverized and mixed together in a mortar to obtain a mixture. The obtained mixed powder was subjected to a milling process with a planetary ball mill (Type P-7 manufactured by Fritsch GmbH) at 500 rpm for 12 hours. Thus, a halide solid electrolyte powder was obtained. The obtained halide solid electrolyte had composition represented by Li_{2.7}Ti_{0.3}Al_{0.7}F₆ (hereinafter referred to as LTAF). The obtained LTAF was used as a coating material (first solid electrolyte) of Example 1.

### [Production of coated active material]

The surface of NCA serving as the positive electrode active material was coated with LTAF serving as the coating material. A thin film of LTAF was formed by a compression shear process with a particle composing apparatus (NOB-MINI manufactured by Hosokawa Micron Corporation). Specifically, NCA and LTAF were weighed to have a weight ratio of 97.3:2.7 and processed under the conditions of a blade clearance of 2 mm, a rotation speed of 6000 rpm, and a processing time of 50 minutes. Thus, the surface of NCA was coated with LTAF so that a thin film was formed. After that, the moisture content in the coated active material was adjusted by still standing for 48 hours in a draft chamber at a temperature of about 20°C and a humidity of about 20%. Thus, a coated active material of Example 1 was obtained.

### [Production of second solid electrolyte]

In an argon glove box controlled to a dew point of -60°C or lower, Li₂S and P₂S₅ serving as raw material powders were weighed to have a molar ratio of Li₂S:P₂S₅ = 75:25. These materials were pulverized and mixed together in a mortar to obtain a mixture. After that, the mixture was subjected to a milling process with a planetary ball mill (Type P-7 manufactured by Fritsch GmbH) at 510 rpm for 10 hours. Thus, a glass-like solid electrolyte was obtained. The glass-like solid electrolyte was subjected to a heating process under the conditions of 270°C for 2 hours in an inert atmosphere. Thus, Li₂S-P₂S₅ (hereinafter referred to as LPS) serving as a glass-ceramic sulfide solid electrolyte was obtained. The obtained LPS was used as a second solid electrolyte of Example 1.

### [Production of positive electrode material]

In an argon glove box, the coated active material and LPS serving as the second solid electrolyte were weighed so that the volume ratio of the coated active material to the LPS was 60:40. Furthermore, a fibrous conductive additive (VGCF (registered trademark)-H manufactured by Resonac Packaging Corporation) was weighed so as to have 1.5 mass% to the mass of NCA. These materials were mixed together in an agate mortar to produce a positive electrode material of Example 1.

### <<Example 2>>

After the coating of the surface of NCA with LTAF, the moisture content in the coated active material was adjusted by still standing for 5 minutes in a dry air environment at a temperature of about 20°C and a dew point of about -30°C. In the same manner as in Example 1 except for the above, a coated active material of Example 2 was obtained. In the same manner as in Example 1 using the coated active material of Example 2, a positive electrode material of Example 2 was produced.

### <<Example 3>>

After the coating of the surface of NCA with LTAF, the moisture content in the coated active material was adjusted by still standing for 1 hour in a dry air environment at a temperature of about 20°C and a dew point of about -30°C. **In** the same manner as in Example 1 except for the above, a coated active material of Example 3 was obtained. In the same manner as in Example 1 using the coated active material of Example 3, a positive electrode material of Example 3 was produced.

### <<Example 4>>

After the coating of the surface of NCA with LTAF, the moisture content in the coated active material was adjusted by still standing for 6 hours in a dry air environment at a temperature of about 20°C and a dew point of about -30°C. In the same manner as in Example 1 except for the above, a coated active material of Example 4 was obtained. In the same manner as in Example 1 using the coated active material of Example 4, a positive electrode material of Example 4 was produced.

### <<Example 5>>

After the coating of the surface of NCA with LTAF, the moisture content in the coated active material was adjusted by still standing for 12 hours in a dry air environment at a temperature of about 20°C and a dew point of about -30°C. In the same manner as in Example 1 except for the above, a coated active material of Example 5 was obtained. In the same manner as in Example 1 using the coated active material of Example 5, a positive electrode material of Example 5 was produced.

### <<Example 6>>

After the coating of the surface of NCA with LTAF, the moisture content in the coated active material was adjusted by still standing for 24 hours in a draft chamber at a temperature of about 20°C and a humidity of about 20%. In the same manner as in Example 1 except for the above, a coated active material of Example 6 was obtained. In the same manner as in Example 1 using the coated active material of Example 6, a positive electrode material of Example 6 was produced.

### <<Example 7>>

After the coating of the surface of NCA with LTAF, the moisture content in the coated active material was adjusted by still standing for 10 minutes in a dry air environment at a temperature of about 20°C and a dew point of about -20°C. In the same manner as in Example 1 except for the above, a coated active material of Example 7 was obtained. In the same manner as in Example 1 using the coated active material of Example 7, a positive electrode material of Example 7 was produced.

### <<Example 8>>

After the coating of the surface of NCA with LTAF, the moisture content in the coated active material was adjusted by still standing for 20 minutes in a dry air environment at a temperature of about 20°C and a dew point of about -20°C. In the same manner as in Example 1 except for the above, a coated active material of Example 8 was obtained. In the same manner as in Example 1 using the coated active material of Example 8, a positive electrode material of Example 8 was produced.

### <<Example 9>>

After the coating of the surface of NCA with LTAF, the moisture content in the coated active material was adjusted by still standing for 5 minutes in a dry air environment at a temperature of about 20°C and a dew point of about -50°C. In the same manner as in Example 1 except for the above, a coated active material of Example 9 was obtained. In the same manner as in Example 1 using the coated active material of Example 9, a positive electrode material of Example 9 was produced.

### <<Example 10>>

After the coating of the surface of NCA with LTAF, the moisture content in the coated active material was adjusted by still standing for 10 minutes in a dry air environment at a temperature of about 20°C and a dew point of about -50°C. In the same manner as in Example 1 except for the above, a coated active material of Example 10 was obtained. In the same manner as in Example 1 using the coated active material of Example 10, a positive electrode material of Example 10 was produced.

### <<Example 11>>

After the coating of the surface of NCA with LTAF, the moisture content in the coated active material was adjusted by still standing for 12 hours in a dry air environment at a temperature of about 20°C and a dew point of about -30°C, and then drying for 14 days in a vacuum drying furnace at a temperature of 140°C. In the same manner as in Example 1 except for the above, a coated active material of Example 11 was obtained. In the same manner as in Example 1 using the coated active material of Example 11, a positive electrode material of Example 11 was produced.

### <<Comparative Example 1>>

A material in which the surface of NCA was coated with LTAF was used as a coated active material of Comparative Example 1. That is, in Comparative Example 1, the moisture content was not adjusted after the coating of the surface of NCA with LTAF. In the same manner as in Example 1 using the coated active material of Comparative Example 1, a positive electrode material of Comparative Example 1 was produced.

### (Measurement of moisture content of coated active material)

For each of the coated active materials of the examples and the comparative example, the moisture content MC₁₈₀ was determined by the Karl Fischer method described in Embodiment 1. For the measurement of the moisture content of the coated active material, a Karl Fischer moisture meter (EV-2010 manufactured by HIRANUMA) was used. The results are shown in Table 1.

Furthermore, as a reference value, for each of the coated active materials of the examples and the comparative example, MC₁₂₀, which was a value obtained by dividing the integrated value of the amount of moisture released from the coated active material at the time of the heating of the coated active material from 25°C to 120°C by the total mass of the coated active material, was determined. The results are shown in Table 1. The moisture content MC₁₂₀ was determined by the following method. In the Karl Fischer method described in Embodiment 1, a measurement sample was heated from 25°C to 120°C at a rate of temperature rise of 10°C per minute to vaporize the moisture contained in the measurement sample. The integrated value of the amount of moisture released from the coated active material was determined by quantifying and integrating the moisture vaporized by coulometric titration until the amount of the moisture vaporized reached the background moisture release amount or less, and the integrated value of the moisture content was divided by the total mass of the coated active material. It is inferred that the moisture released from the coated active material at the time of the heating of the coated active material from 25°C to 120°C is mainly moisture that is physically adsorbed on the surface of the coated active material.

The moisture content MC₁₈₀ and moisture content MC₁₂₀ of the coated active material of Comparative Example 1 were each 0 ppm. This indicates that the moisture content in the coated active material of Comparative Example 1 was below the detection limit of the Karl Fischer moisture meter.

### [Production of battery]

The following processes were performed for each of the coated active materials of the examples and the comparative example.

In an argon glove box controlled to a dew point of -60°C or lower, the positive electrode material was weighed to contain 5 mg of NCA. LPS and the positive electrode material were stacked in an insulating outer cylinder in this order. The obtained stack was pressure-molded at a pressure of 720 MPa. Next, lithium metal was placed in contact with the LPS layer, and pressure molding was performed again at a pressure of 40 MPa. Thus, a stack formed of a positive electrode, an electrolyte layer, and a negative electrode was produced. Next, stainless steel current collectors were placed on the top and the bottom of the stack. Current collector leads were attached to the current collectors. Then, an insulating ferrule was used to hermetically seal the outer cylinder to block the inside of the outer cylinder from the outside air atmosphere. Through the above processes, batteries of the examples and the comparative example were produced. A surface pressure of 150 MPa was applied to the battery by clamping the battery from the top and the bottom with four bolts.

### (Measurement of resistance of battery)

The resistance of each of the batteries of the examples and the comparative example was measured under the following conditions.

The battery was placed in a thermostatic chamber at 25°C. The battery was subjected to constant-current charge at a current value of 50 µA equivalent to 0.05 C rate (20-hour rate) relative to the theoretical capacity of the battery until the voltage reached 4.25 V. After that, the battery was subjected to constant-current discharge at a current value of 50 µA equivalent to 0.05 C rate (20-hour rate) relative to the theoretical capacity of the battery until the voltage reached 3.75 V. Then, constant-current discharge was performed for 2 seconds at a current value of 46.4 mA equivalent to 46.4 C rate relative to the theoretical capacity of the battery. The resistance R₁ before a durability test was determined by dividing the amount of voltage drop at this time by a discharge current value.

Next, the durability test was performed. First, the temperature of the thermostatic chamber was changed from 25°C to 60°C, and the battery was stored for 1 week in a state of being charged to 4.02 V.

After the storage, the temperature of the thermostatic chamber was changed to 25°C, and the battery was subjected to constant-current charge at a current value of 50 µA equivalent to 0.05 C rate (20-hour rate) relative to the theoretical capacity of the battery until the voltage reached 4.25 V. After that, the battery was subjected to constant-current discharge at a current value of 50 µA equivalent to 0.05 C rate (20-hour rate) relative to the theoretical capacity of the battery until the voltage reached 3.75 V. Then, constant-current discharge was performed for 2 seconds at a current value of 46.4 mA equivalent to 46.4 C rate relative to the theoretical capacity of the battery. The resistance R₂ after the durability test was determined by dividing the amount of voltage drop at this time by a discharge current value.

A value (R₂/R₁) × 100 (%) obtained by dividing the resistance R₂ after the durability test by the resistance R₁ before the durability test is shown in Table 1.

**[Table 1]**

| | MC₁₂₀ (ppm) | MC₁₈₀ (ppm) | (R₂/R₁) × 100 (%) |
|---|---|---|---|
| Example 1 | 464 | 343 | 100.4 |
| Example 2 | 1 | 4 | 112.0 |
| Example 3 | 24 | 39 | 111.1 |
| Example 4 | 34 | 58 | 110.4 |
| Example 5 | 63 | 130 | 109.2 |
| Example 6 | 302 | 187 | 102.5 |
| Example 7 | 4 | 35 | 110.7 |
| Example 8 | 15 | 49 | 110.8 |
| Example 9 | 0 | 1 | 112.1 |
| Example 10 | 0 | 3 | 111.8 |
| Example 11 | 3 | 94 | 108.8 |
| Comparative Example 1 | 0 | 0 | 112.4 |

### <<Consideration>>

As shown in Table 1, each of the batteries of Examples 1 to 11, in which the moisture content MC₁₈₀ satisfied 0 ppm < MC₁₈₀ ≤ 600 ppm, showed a lower value for (R₂/R₁) × 100 as compared to the battery of Comparative Example 1, in which the moisture content MC₁₈₀ was 0 ppm. It is inferred that this is because when the moisture content MC₁₈₀ is adjusted to an appropriate range, at the time of the initial charging of a battery including a positive electrode material produced by mixing the coated active material and the second solid electrolyte, a homogeneous reaction layer is formed at the interface therebetween, and the layer suppresses the increase in the resistance of the battery.

From a comparison between Example 9 and Comparative Example 1, it is understood that when the moisture content MC₁₈₀ is 1 ppm or more, an increase in the resistance of the battery is suppressed. It is inferred that this is because the homogeneity of the reaction layer formed on the surface of the coated active material is enhanced when the coated active material and the second solid electrolyte are mixed.

From comparison between Example 7, and each of Example 2 and Comparative Example 1, it is understood that when the moisture content MC₁₈₀ is 30 ppm or more, the increase in the resistance of the battery is further suppressed. It is inferred that this is because the homogeneity of the reaction layer formed on the surface of the coated active material is further enhanced when the coated active material and the second solid electrolyte are mixed.

From a comparison between Example 4, and each of Examples 2 and 3 and Comparative Example 1, it is understood that when the moisture content MC₁₈₀ is 50 ppm or more, the increase in the resistance of the battery is even further suppressed. It is inferred that this is because the homogeneity of the reaction layer formed on the surface of the coated active material is even further enhanced when the coated active material and the second solid electrolyte are mixed.

From a comparison between Example 5, and each of Examples 2 to 4 and Comparative Example 1, it is understood that when the moisture content MC₁₈₀ is 120 ppm or more, the increase in the resistance of the battery is further suppressed. It is inferred that this is because the thickness of the reaction layer formed on the surface of the coated active material relatively increases when the coated active material and the second solid electrolyte are mixed.

From a comparison between Example 6, and each of Examples 2 to 5 and Comparative Example 1, it is understood that when the moisture content MC₁₈₀ is 180 ppm or more, the increase in the resistance of the battery is even further suppressed. It is inferred that this is because the thickness of the reaction layer formed on the surface of the coated active material sufficiently increases when the coated active material and the second solid electrolyte are mixed.

From a comparison between Example 1, and each of Examples 2 to 6 and Comparative Example 1, it is understood that when the moisture content MC₁₈₀ is 340 ppm or more, the increase in the resistance of the battery is even further suppressed. It is inferred that this is because the homogeneity and thicknesses of the reaction layer at various locations on the coated active material become appropriate.

The moisture content MC₁₈₀ is the amount of moisture desorbed from the coated active material 100 in a relatively high temperature region exceeding 120°C. It is inferred that the moisture is mainly moisture chemically bonded to the surface of the coated active material 100. Therefore, it is inferred that using, as the positive electrode active material, even a material other than NCA, such as Li(NiCoMn)O₂ or LiCoO₂, has the same tendency as that in the results of the present examples .

From a comparison between each of Examples 1 to 8 and 11, and each of Examples 9 and 10, it is understood that even when the moisture content MC₁₂₀ is 0 ppm, a suppressing effect on an increase in the resistance of the battery can be obtained as long as the moisture content MC₁₈₀ satisfies 0 ppm < MC₁₈₀ ≤ 600 ppm. (MC₁₂₀ + MC₁₈₀) may satisfy 1 ppm ≤ MC₁₂₀ + MC₁₈₀ ≤ 1000 ppm, may satisfy 1 ppm ≤ MC₁₂₀ + MC₁₈₀ ≤ 900 ppm, or may satisfy 1 ppm ≤ MC₁₂₀ + MC₁₈₀ ≤ 810 ppm.

### Industrial Applicability

The technique of the present disclosure is useful for, for example, a lithium secondary battery.

## Claims

1. A coated active material comprising:
a positive electrode active material; and
a coating material including a first solid electrolyte and coating at least a portion of a surface of the positive electrode active material, wherein
the first solid electrolyte includes Li, M, and X,
the M is at least one element selected from the group consisting of a metal element other than Li and a metalloid element,
the X is a halogen element, and
when a value obtained by dividing an integrated value of an amount of moisture released from the coated active material at a time of heating of the coated active material from 120°C to 180°C by a total mass of the coated active material is defined as MC₁₈₀,
the MC₁₈₀ satisfies 0 ppm < MC₁₈₀ ≤ 600 ppm.

2. The coated active material according to claim 1, wherein
the MC₁₈₀ satisfies MC₁₈₀ ≤ 400 ppm.

3. The coated active material according to claim 1, wherein
the MC₁₈₀ satisfies 1 ppm ≤ MC₁₈₀.

4. The coated active material according to claim 1, wherein
the MC₁₈₀ satisfies 30 ppm ≤ MC₁₈₀.

5. The coated active material according to claim 1, wherein
the MC₁₈₀ satisfies 50 ppm ≤ MC₁₈₀.

6. The coated active material according to claim 1, wherein the X is F.

7. The coated active material according to claim 1, wherein
the M includes M1 and M2,
the M1 is at least one selected from the group consisting of Ti and Zr, and
the M2 is at least one selected from the group consisting of Al, Y, Mg, and Ca.

8. The coated active material according to claim 7, wherein the M2 is Al.

9. The coated active material according to claim 7, wherein the M1 is Ti.

10. The coated active material according to claim 1, wherein
the first solid electrolyte is represented by the following composition formula (1):
Li_{6-(4-x-4y+my)b}(Ti_{1-x-y}AlₓM3_{y})_{b}F_{6-2z}O_{z} ... (1),
where
the M3 is at least one selected from the group consisting of Zr, Ni, Fe, and Cr,
the m is a valence of the M3, and
the x, the y, the z, and the b satisfy 0.1 < x < 0.9, 0 ≤ y < 0.1, 0 ≤ z < 0.1, and 0.8 < b ≤ 1.2.

11. The coated active material according to claim 10, wherein
the x, the y, the z, and the b satisfy 0.1 < x < 0.9, y = 0, z = 0, and 0.8 < b ≤ 1.2.

12. A positive electrode material comprising:
the coated active material according to any one of claims 1 to 11; and
a second solid electrolyte having composition different from composition of the first solid electrolyte.

13. The positive electrode material according to claim 12, wherein
the second solid electrolyte includes a sulfide solid electrolyte.

14. A battery comprising a positive electrode including the positive electrode material according to claim 12.

15. A battery comprising:
a positive electrode including the positive electrode material according to claim 12;
a negative electrode; and
an electrolyte layer disposed between the positive electrode and the negative electrode.
